# EUROPÄISCHE PATENTSCHRIFT

(11) **EP 4 320 712 B1**
(45) Veröffentlichungstag und Bekanntmachung des Hinweises auf die Patenterteilung: **11.06.2025**
(21) Anmeldenummer: 22711147.3
(22) Anmeldetag: 08.03.2022
(51) Int. Cl.: H02K 5/22, H02K 9/197, H02K 16/04, H02K 21/24

(54) **ELEKTRISCHE MASCHINE**
ELECTRIC MACHINE
MACHINE ÉLECTRIQUE

(30) Priorität: 10.04.2021 DE 102021108949
(43) Veröffentlichungstag der Anmeldung: 14.02.2024
(73) Patentinhaber: Schaeffler Technologies AG & Co. KG, 91074 Herzogenaurach (DE)
(72) Erfinder: RIESS, Stefan, 86916 Kaufering (DE); MENHART, Michael, 86859 Igling (DE); OSWALD, Johann, 82438 Eschenlohe (DE); SONNTAG, Carsten, 82131 Gauting-Königswiesen (DE)
(86) Internationale Anmeldenummer: PCT/DE2022/100182
(87) Internationale Veröffentlichungsnummer: WO 2022/214121

(56) Entgegenhaltungen:
- EP-A2- 1 367 690
- WO-A1-2019/241765

## Beschreibung

Die vorliegende Erfindung betrifft eine elektrische Maschine, insbesondere für einen elektrisch betriebenen Antriebsstrang eines Kraftfahrzeugs, umfassend einen relativ zu einem Stator drehbar gelagerten Rotor, wobei der Rotor eine Rotorwelle mit zumindest einem ersten auf der Rotorwelle dreh- und verschiebefest angeordneten Rotorkörper aufweist, wobei der Stator einen ersten Statorkörper und einen zweiten Statorkörper umfasst, welche voneinander beabstandet sind und der erste Statorkörper eine erste Statorwicklung und der zweite Statorkörper eine zweite Statorwicklung aufweist, wobei die erste Statorwicklung innerhalb eines ersten Hydraulikraums und die zweite Statorwicklung innerhalb eines zweiten Hydraulikraums angeordnet ist, innerhalb derer die jeweiligen Statorwicklungen, jeweils von einem Hydraulikfluid zumindest abschnittsweise kontaktierbar sind.

Bei Kraftfahrzeugen werden für den Antrieb verstärkt Elektromotoren eingesetzt, um Alternativen zu Verbrennungsmotoren zu schaffen, die fossile Brennstoffe benötigen. Um die Alltagstauglichkeit der Elektroantriebe zu verbessern und zudem den Benutzern den gewohnten Fahrkomfort bieten zu können, sind bereits erhebliche Anstrengungen unternommen worden.

Eine ausführliche Darstellung zu einem Elektroantrieb ergibt sich aus einem Artikel der Zeitschrift ATZ 113. Jahrgang, 05/2011, Seiten 360-365 von Erik Schneider, Frank Fickl, Bernd Cebulski und Jens Liebold mit dem Titel: Hochintegrativ und Flexibel Elektrische Antriebseinheit für E-Fahrzeuge. In diesem Artikel wird eine Antriebseinheit für eine Achse eines Fahrzeugs beschrieben, welche einen E-Motor umfasst, der konzentrisch und koaxial zu einem Kegelraddifferenzial angeordnet ist, wobei in dem Leistungsstrang zwischen Elektromotor und Kegelraddifferenzial ein schaltbarer 2-Gang-Planetenradsatz angeordnet ist, der ebenfalls koaxial zu dem E-Motor bzw. dem Kegelraddifferenzial oder Stirnradifferential positioniert ist. Die Antriebseinheit ist sehr kompakt aufgebaut und erlaubt aufgrund des schaltbaren 2-Gang-Planetenradsatzes einen guten Kompromiss zwischen Steigfähigkeit, Beschleunigung und Energieverbrauch. Derartige Antriebseinheiten werden auch als E-Achsen oder elektrisch betreibbarer Antriebsstrang bezeichnet.

Neben den rein elektrisch betriebenen Antriebssträngen sind auch hybride Antriebsstränge bekannt. Derartige Antriebsstränge eines Hybridfahrzeuges umfassen üblicherweise eine Kombination aus einer Brennkraftmaschine und einem Elektromotor und ermöglichen - beispielsweise in Ballungsgebieten - eine rein elektrische Betriebsweise bei gleichzeitiger ausreichender Reichweite und Verfügbarkeit gerade bei Überlandfahrten. Zudem besteht die Möglichkeit, in bestimmten Betriebssituationen gleichzeitig durch die Brennkraftmaschine und den Elektromotor anzutreiben.

Bei der Entwicklung der für E-Achsen oder Hybridmodule vorgesehenen elektrischen Maschinen besteht ein anhaltendes Bedürfnis daran, deren Leistungsdichten zu steigern, so dass der hierzu notwendigen Kühlung der elektrischen Maschinen wachsende Bedeutung zukommt. Aufgrund der notwenigen Kühlleistungen haben sich in den meisten Konzepten Hydraulikflüssigkeiten, wie Kühlöle, zum Abtransport von Wärme aus den thermisch beaufschlagten Bereichen einer elektrischen Maschine durchgesetzt.

Die Mantelkühlung sowie die Wickelkopfkühlung sind beispielsweise aus dem Stand der Technik für die Realisierung einer Kühlung von elektrischen Maschinen mittels Hydraulikflüssigkeiten bekannt. Während die Mantelkühlung die entstehende Wärme an der äußeren Oberfläche des Statorblechpakets in einen Kühlkreislauf überträgt, erfolgt bei der Wickelkopfkühlung der Wärmeübergang direkt an den Leitern außerhalb des Statorblechpakets im Bereich der Wickelköpfe in das Fluid.

Weitere Verbesserungen bieten getrennt ausgeführte Kühlkanäle, welche sowohl in das Blechpaket des Stators (siehe z. B. EP 3 157 138 A1) als auch in die Nut zusätzlich zu den Leitern eingebracht werden (siehe z. B. Markus Schiefer: Indirekte Wicklungskühlung von hochausgenutzten permanenterregten Synchronmaschinen mit Zahnspulenwicklung, Dissertation, Karlsruher Institut für Technologie (KIT), 2017).

Es sind auch Konzepte bekannt, bei denen die Wicklungen direkt mit Hydraulikflüssigkeit umströmt werden, um die Leistungsdichte zu erhöhen. Eine verbesserte Kühlung mit direktem Kontakt von Hydraulikflüssigkeit und Leiter in der Nut ist bereits grundsätzlich aus dem Stand der Technik bekannt. So beschreibt beispielsweise DE 10 2015 013 018 A1 eine Lösung für elektrische Maschinen mit Einzelzahnwicklung, wobei das Fluid direkt die Wicklungen, welche um die Zähne gewickelt sind, umströmt.

Aus der EP 1 367 690 A2 ist eine elektrische Maschine gemäß dem Oberbegriff des Anspruchs 1 bekannt.

Bezüglich weiteren Standes der Technik wird auf die WO 2019/241765 A1 verwiesen.

Die Aufgabe der Erfindung ist es, eine elektrische Maschine bereitzustellen, die eine hohe Leistungsdichte durch eine optimierte Kühlung und optimierte elektromagnetische Ausgestaltung aufweist. Ferner ist es die Aufgabe der Erfindung, dass die elektrische Maschine kostengünstig herstellbar sowie montagefreundlich ausgeführt ist.

Diese Aufgabe wird gelöst durch eine elektrische Maschine, insbesondere für einen elektrisch betriebenen Antriebsstrang eines Kraftfahrzeugs, umfassend einen relativ zu einem Stator drehbar gelagerten Rotor, wobei der Rotor eine Rotorwelle mit zumindest einem ersten auf der Rotorwelle dreh- und verschiebefest angeordneten Rotorkörper aufweist, wobei der Stator einen ersten Statorkörper und einen zweiten Statorkörper umfasst, welche voneinander beabstandet sind und der erste Statorkörper eine erste Statorwicklung und der zweite Statorkörper eine zweite Statorwicklung aufweist, wobei die erste Statorwicklung innerhalb eines ersten Hydraulikraums bzw. Nassraums und die zweite Statorwicklung innerhalb eines zweiten Hydraulikraums bzw. Nassraums angeordnet ist, innerhalb derer die jeweiligen Statorwicklungen, jeweils von einem Hydraulikfluid bzw. Fluid zumindest abschnittsweise kontaktierbar sind, wobei die elektrische Maschine ein hydraulisches Verbindungselement umfasst, welches den ersten Hydraulikraum hydraulisch mit dem zweiten Hydraulikraum verbindet, wobei innerhalb des hydraulischen Verbindungselements wenigstens ein elektrischer Leiter der ersten Statorwicklung und/oder der zweiten Statorwicklung angeordnet ist.

Das hydraulische Verbindungselement kann eine beliebige geschlossene Querschnittsgeometrie aufweisen und beispielsweise als ein Rohr oder ein Schlauch zur Überbrückung von einer oder mehreren Trennfugen zwischen einem ersten Hydraulikraum eines ersten Statorkörpers und einem zweiten Hydraulikraum eines zweiten Statorkörpers. Dieses hydraulische Verbindungselement sorgt ferner dafür, dass der elektrische Leiter einer Statorwicklung in diesem geführt und gleichzeitig vom Kühlmittel umspült wird. Dabei kann durch eine geeignete Auswahl des Werkstoffs des hydraulischen Verbindungselements und einer entsprechenden Wandstärke gleichzeitig eine elektrische Isolationswirkung gegenüber elektrisch leitenden Gehäuseteilen erzielt werden. Das hydraulische Verbindungselement kann bevorzugt in vorliegenden Durchbrüchen eingesteckt bzw. eingelegt sein. Darüber hinaus können mit dem hydraulischen Verbindungselement Luft- und Kriechstrecken innerhalb der elektrischen Maschine angepasst werden.

Die Dichtwirkung des hydraulischen Verbindungselements zu angrenzenden Gehäuseteilen kann dabei beispielsweise durch einen definierten Spalt zwischen dem Dichtelement und dem Gehäuse, durch Verpressung des hydraulischen Verbindungselements im Dichtbereich mit angrenzenden Gehäuseteilen, über ein gesondertes Dichtelement oder einen Dichtstoff erzielt werden. Das Dichtelement kann dabei vorzugsweise auch in das hydraulische Verbindungselement zur abgedichteten und elektrisch isolierten Durchführung integriert sein.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Elektrische Maschinen dienen zur Umwandlung elektrischer Energie in mechanische Energie und/oder umgekehrt, und umfassen in der Regel einen als Stator, Ständer oder Anker bezeichneten ortsfesten Teil sowie einen als Rotor oder Läufer bezeichneten und gegenüber dem ortsfesten Teil beweglich angeordneten Teil. Im Falle von als Rotationsmaschinen ausgebildeten elektrischen Maschinen wird insbesondere zwischen Radialflussmaschinen und Axialflussmaschinen unterschieden. Dabei zeichnet sich eine Radialflussmaschine dadurch aus, dass die Magnetfeldlinien in dem zwischen Rotor und Stator ausgebildeten Luftspalt, sich in radialer Richtung erstrecken, während im Falle einer Axialflussmaschine sich die Magnetfeldlinien in dem zwischen Rotor und Stator gebildeten Luftspalt in axialer Richtung erstrecken. Die erfindungsgemäße elektrische Maschine kann als Axialflussmaschine oder Radialflussmaschine ausgebildet sein.

Der Stator der elektrischen Maschine kann insbesondere als Stator für eine Radialflussmaschine ausgebildet sein. Der Stator einer Radialflussmaschine ist üblicherweise zylindrisch aufgebaut und besteht bevorzugt aus gegeneinander elektrisch isolierten und geschichtet aufgebauten und zu Blechpaketen paketierten Elektroblechen. Über den Umfang verteilt, können in das Elektroblech parallel zur Rotorwelle verlaufend angeordnet Nuten und/oder Kanäle eingelassen sein, welche die Statorwicklung bzw. Teile der Statorwicklung aufnehmen. Der für eine Radialflussmaschine ausgebildete Stator kann als Stator für einen Innenläufer oder Außenläufer ausgebildet sein. Bei einem Innenläufer erstrecken sich beispielsweise die Statorzähne radial nach innen, während sie sich bei einem Außenläufer radial nach außen erstrecken.

Die erfindungsgemäße elektrische Maschine ist insbesondere für die Verwendung innerhalb eines Antriebsstrangs eines hybrid- oder vollelektrisch angetriebenen Kraftfahrzeugs vorgesehen. Insbesondere ist die elektrische Maschine so dimensioniert, dass Fahrzeuggeschwindigkeiten größer als 50 km/h, vorzugsweise größer als 80 km/h und insbesondere größer als 100 km/h erreicht werden können. Besonders bevorzugt weist die elektrische Maschine eine Leistung größer als 30 kW, vorzugsweise größer als 50 kW und insbesondere größer als 70 kW auf. Es ist des Weiteren bevorzugt, dass die elektrische Maschine Drehzahlen größer als 5.000 U/min bzw. 1/min, besonders bevorzugt größer als 10.000 U/min, ganz besonders bevorzugt größer als 12.500 U/min bereitstellt.

Eine Statorwicklung ist ein elektrisch leitfähiger Leiter, dessen Längenerstreckung wesentlich größer ist als seine Erstreckung senkrecht zur Längserstreckung. Die Statorwicklung kann grundsätzlich jede beliebige Querschnittsform aufweisen. Bevorzugt sind rechteckige Querschnittsformen, da sich mit diesen hohe Packungs- und folglich Leistungsdichten erzielen lassen. Ganz besonders bevorzugt ist eine Statorwicklung aus Kupfer gebildet. Bevorzugt weist eine Statorwicklung eine Isolierung auf. Zur Isolierung der Statorwicklung kann beispielsweise Glimmerpapier, welches aus mechanischen Gründen durch einen Glasgewebeträger verstärkt sein kann, in Bandform um eine oder mehrere Statorwicklungen gewickelt sein, welche mittels eines aushärtenden Harzes imprägniert sind. Grundsätzlich ist es auch möglich, ein aushärtbares Polymer oder eine Lackschicht ohne ein Glimmerpapier zu verwenden, um eine Statorwicklung zu isolieren.

Gemäß einer vorteilhaften Ausgestaltung der Erfindung kann vorgesehen sein, dass die elektrische Maschine als Axialflussmaschine ausgebildet ist, umfassend den relativ zu dem Stator drehbar in einem Trockenraum gelagerten Rotor, wobei der Rotor die Rotorwelle mit zumindest dem ersten scheibenförmig ausgebildeten, auf der Rotorwelle dreh- und verschiebefest angeordneten, Rotorkörper aufweist, wobei der Stator den ersten ringscheibenförmigen Statorkörper und den zweiten ringscheibenförmigen Statorkörper umfasst, welche koaxial zueinander und zu der Rotorwelle angeordnet und axial unter Zwischenanordnung des Rotors voneinander beabstandet sind. Der Vorteil dieser Ausgestaltung liegt darin, dass die elektrische Maschine so axial sehr kompakt bauend ausgebildet werden kann.

Der magnetische Fluss in einer derartigen elektrischen Axialflussmaschine (AFM), wie beispielsweise einer als Axialflussmaschine ausgebildeten elektrischen Antriebsmaschine eines Kraftfahrzeugs, ist im Luftspalt zwischen Stator und Rotor axial zu einer Rotationsrichtung des Rotors der Axialflussmaschine gerichtet. Es existieren unterschiedliche Typen von Axialflussmaschinen. Ein bekannter Typ ist eine sogenannte I-Anordnung, bei der der Rotor axial neben einem Stator oder zwischen zwei Statoren angeordnet ist. Ein anderer bekannter Typ ist eine sogenannte H-Anordnung, bei der zwei Rotoren auf gegenüberliegenden axialen Seiten eines Stators angeordnet sind. Im Zusammenhang mit der vorliegenden Erfindung ist eine I-Anordnung bevorzugt.

Es kann gemäß einer weiteren bevorzugten Weiterentwicklung der Erfindung auch vorgesehen sein, dass das hydraulische Verbindungselement aus einem elektrisch nichtleitfähigen Material gebildet ist. Es kann hierdurch erreicht werden, dass eine gute elektrische Isolationswirkung zu elektrisch leitenden Bauteilen der elektrischen Maschine bereitgestellt werden kann.

Des Weiteren kann es gemäß einer ebenfalls vorteilhaften Ausgestaltung der Erfindung vorgesehen sein, dass das hydraulische Verbindungselement eine im Wesentlichen zylinderringartige Raumform aufweist.

Gemäß einer weiteren besonders bevorzugten Ausführungsform der Erfindung kann es vorgesehen sein, dass das hydraulische Verbindungselement radial oberhalb des ersten Statorkörpers und/oder des zweiten Statorkörpers positioniert ist.

Des Weiteren kann die Erfindung auch dahingehend weiterentwickelt sein, dass das hydraulische Verbindungselement eine erste Dichtung aufweist, die den ersten Hydraulikraum gegenüber dem Trockenraum des Rotors abdichtet und/oder das hydraulische Verbindungselement eine zweite Dichtung aufweist, die den zweiten Hydraulikraum gegenüber dem Trockenraum des Rotors abdichtet. **In** einer ebenfalls bevorzugten Ausgestaltungsvariante der Erfindung kann in diesem Zusammenhang auch vorgesehen sein, dass die erste Dichtung und/oder die zweite Dichtung einstückig mit dem hydraulischen Verbindungselement ausgebildet sind/ist.

Auch kann es vorteilhaft sein, die Erfindung dahingehend weiterzuentwickeln, dass das hydraulische Verbindungselement mittels einer Presspassung mit einem den ersten Hydraulikraum zumindest abschnittsweise begrenzenden ersten Gehäusebauteil verbunden ist und/oder das hydraulische Verbindungselement mittels einer Presspassung mit einem den zweiten Hydraulikraum zumindest abschnittsweise begrenzenden zweiten Gehäusebauteil verbunden ist.

Gemäß einer weiteren zu bevorzugenden Ausgestaltung des Erfindungsgegenstandes kann vorgesehen sein, dass eine Mehrzahl von hydraulischen Verbindungselementen umfänglich verteilt zwischen dem ersten Hydraulikraum und dem zweiten Hydraulikraum angeordnet ist.

Schließlich kann die Erfindung auch in vorteilhafter Weise dahingehend ausgeführt sein, dass die hydraulischen Verbindungselemente im Wesentlichen identisch ausgeführt sind, wodurch die Bauteilkomplexität und somit die Herstellkosten der elektrischen Maschine gesenkt werden können.

Es ist ferner zu bevorzugen, dass die Wicklungsenden der Axialflussmaschine in der Art verlaufen, dass im Zusammenbau die Wicklungsenden parallel bzw. annähernd parallel zur Maschinenhauptachse orientiert sind. Die Wicklungsenden werden bei der Montage in bevorzugter Weise durch dafür vorgesehene und entsprechend ausgebildete lokale Freimachungen der Axialflussmaschine zu einer der Stirnseiten der Axialflussmaschine geführt und nach dem entsprechenden axialen Zusammenschieben der entsprechenden Maschinenteile geeignet elektrisch und mechanisch verbunden. Die so verbundenen Wicklungsenden der Statoren werden in besonders bevorzugter Weise stirnseitig über Verbindungsleiter zu den axial positionierten Phasenanschlüssen geführt. Diese Verbindungsleiter können durch Wicklungsenden nahtlos an die Wicklung anschließen oder an die Wicklung geeignet elektrisch und mechanisch angeschlossen sein. Der Sternpunkt bzw. die Sternpunkte der Maschine werden bevorzugt dabei nicht bis zum Phasenanschluss ausgeführt.

Zur Bereitstellung einer elektrischen Kontaktierung zwischen einem Nassraum und einem Trockenraum der elektrischen Maschine kann insbesondere bevorzugt wenigstens ein elektrisches Anschlusselement vorgesehen sein. Hierzu besitzt das elektrische Anschlusselement einen Kontaktierungskörper, welcher mittels einer Presspassung in einer Aufnahmehülse fixiert ist. Es kann insbesondere vorgesehen sein, einen in die Aufnahmehülse eingepressten Bolzen oder einer Gewindebuchse als Kontaktierungskörper zu verwenden, dessen Hauptfunktion die Abstützung der Klemmkräfte beispielsweise über den tragenden Querschnitt und einen Hinterschnitt ist. Der Werkstoff des Bolzens bzw. der Gewindebuchse besitzt in vorteilhafter Weise eine höhere mechanische Belastbarkeit (Fließgrenze) als der Werkstoff der Aufnahmehülse. Die Aufnahmehülse ihrerseits weist bevorzugt eine höhere spezifische elektrische Leitfähigkeit verglichen mit dem Kontaktierungskörper auf. Dafür ist der Werkstoff der Aufnahmehülse weicher und hat demnach eine geringere mechanische Belastbarkeit (Fließgrenze) als der Werkstoff des Kontaktierungskörpers.

Der als Bolzen oder Gewindebuchse ausgebildete Kontaktierungskörper wird in bevorzugter Weise so in das Gehäusebauteil eingepresst, dass der weichere Werkstoff elastisch und plastisch umgeformt wird, so dass die Dichtwirkung ausreicht, um die beiden Räume beidseits des Gehäusebauteils gegeneinander bzw. einen Raum gegen die Umwelt abzudichten. Dafür ist insbesondere bevorzugt am Kontaktierungskörper, beispielsweise am Bolzen bzw. der Gewindebuchse, eine Querschnittsaufweitung vorgesehen, welche für die Umformung des weicheren Werkstoffs ausgelegt ist. Der elastische Anteil der Umformung sorgt dabei für die Aufrechterhaltung der Anpressung und der plastische Anteil der Umformung zur Verlängerung der Dichtstrecken im dafür vorgesehenen Bereich. Überschüssiges Material des Gegenstücks wird dabei in einem dafür vorgesehenen Bereich aufgenommen. Gleichzeitig entsteht durch die Querschnittsaufweitung des Kontaktierungskörpers, beispielsweise des Bolzens bzw. der Gewindebuchse, eine Hinterschneidung, die dem Auszug der Aufnahmehülse entgegenwirkt. Der Raum zur Aufnahme des überschüssigen Materials beim Einpressvorgang kann in zu bevorzugender Weise ebenfalls mit zusätzlichen Dichtmitteln oder Dichtelementen bestückt werden und so die Dichtwirkung weiter steigern.

Die Aufnahmehülse mit dem eingepressten Kontaktierungskörper, beispielsweise dem Bolzen bzw. der Gewindebuchse, wird besonders bevorzugt elektrisch isoliert im Gehäusebauteil angebracht. Dafür kann beispielsweise entweder das Gehäusebauteil aus einem elektrisch schlecht leitenden Werkstoff bzw. einem Isolationsstoff gefertigt oder in einen elektrisch nichtleitenden Adapter eingesetzt sein, der die elektrische Isolationswirkung zwischen dem Gehäusebauteil und dem Zusammenbau aus Kontaktierungskörper und Aufnahmehülse realisiert. Die Dichtwirkung kann beispielsweise über Dichtelemente zwischen der Aufnahmehülse und dem angrenzenden Gehäusebauteil oder Adapter erzielt werden.

Nachfolgend wird die Erfindung anhand von Figuren ohne Beschränkung des allgemeinen Erfindungsgedankens näher erläutert werden.

Es zeigen:
Figur 1 eine elektrische Axialflussmaschine in einer schematischen Axialschnittansicht,
Figur 2 eine elektrische Axialflussmaschine in einer perspektivischen Explosionsdarstellung, und
Figur 3 ein Kraftfahrzeug mit einer elektrischen Maschine in schematischen Blockschaltdarstellungen.

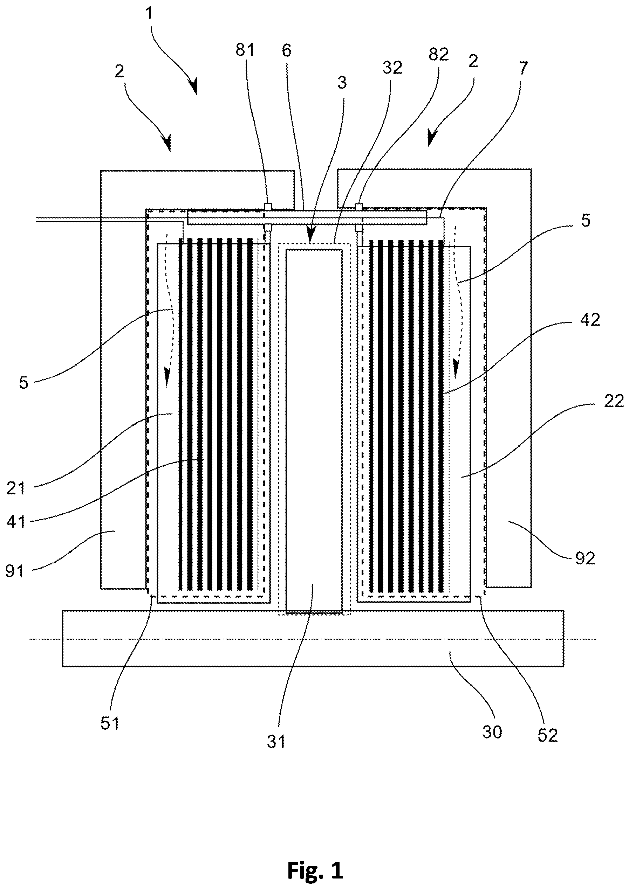

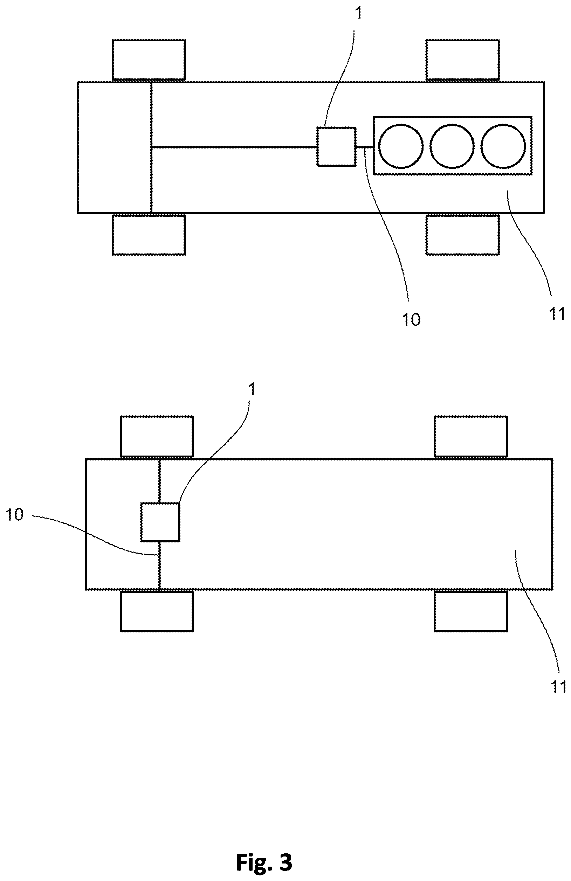

Die Figur 1 zeigt eine elektrische Maschine 1 für einen elektrisch betriebenen Antriebsstrang 10 eines Kraftfahrzeugs 11, wie es exemplarisch in der Figur 3 gezeigt ist. In der oberen Darstellung der Figur 3 ist der Antriebsstrang 10 eines hybrid angetriebenen und in der unteren Darstellung eines vollelektrisch angetriebenen Kraftfahrzeugs 11 mit jeweils einer elektrischen Maschine 1 gezeigt.

Die elektrische Maschine 1 umfasst einen relativ zu einem Stator 2 drehbar gelagerten Rotor 3, wobei der Rotor 3 eine Rotorwelle 30 mit zumindest einem ersten auf der Rotorwelle 30 dreh- und verschiebefest angeordneten Rotorkörper 31 aufweist. Der Stator 2 besitzt einen ersten Statorkörper 21 und einen zweiten Statorkörper 22, welche voneinander in axialer Richtung beabstandet sind, wobei der erste Statorkörper 21 eine erste Statorwicklung 41 und der zweite Statorkörper 22 eine zweite Statorwicklung 42 aufweist, wobei die erste Statorwicklung 41 innerhalb eines ersten Hydraulikraums 51 und die zweite Statorwicklung 42 innerhalb eines zweiten Hydraulikraums 52 angeordnet ist, innerhalb derer die jeweiligen Statorwicklungen 41,42 jeweils von einem Hydraulikfluid 5 zumindest abschnittsweise kontaktierbar sind.

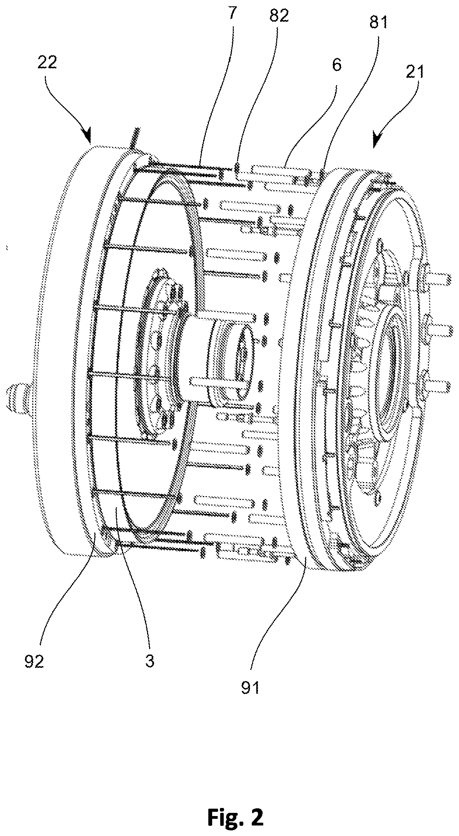

Die elektrische Maschine 1 weist ferner eine Mehrzahl von hydraulischen Verbindungselementen 6 auf, welche den ersten Hydraulikraum 51 hydraulisch mit dem zweiten Hydraulikraum 52 verbinden. Innerhalb der hydraulischen Verbindungselemente 6 ist jeweils wenigstens ein elektrischer Leiter 7 der zweiten Statorwicklung 42 angeordnet. Die Mehrzahl von im Wesentlichen identisch ausgeführten hydraulischen Verbindungselementen 6 ist umfänglich verteilt zwischen dem ersten Hydraulikraum 51 und dem zweiten Hydraulikraum 52 angeordnet, was besonders gut aus der Zusammenschau von Figur 1 mit der Figur 2 ersichtlich wird.

Aus der Figur 1 ist ferner ersichtlich, dass die elektrische Maschine als Axialflussmaschine 1 ausgebildet ist mit dem relativ zu dem Stator 2 drehbar in einem Trockenraum 32 gelagerten Rotor 3. Der Rotor 3 umfasst die Rotorwelle 30 mit zumindest dem ersten scheibenförmig ausgebildeten, auf der Rotorwelle 30 dreh- und verschiebefest angeordneten, Rotorkörper 31. Der Stator 2 besitzt den ersten ringscheibenförmigen Statorkörper 21 und den zweiten ringscheibenförmigen Statorkörper 22, welche koaxial zueinander und zu der Rotorwelle 30 angeordnet und axial unter Zwischenanordnung des Rotors 3 voneinander beabstandet sind.

Die erste Statorwicklung 41 weist aus dem ersten Statorkörper 21 austretende erste Wicklungsenden auf, welche sich radial oberhalb des Statorkörpers 21 in axialer Richtung erstrecken. Auch die zweite Statorwicklung 42 besitzt aus dem zweiten Statorkörper 22 austretende zweite Wicklungsenden, welche sich radial oberhalb des ersten Statorkörpers 21 und des zweiten Statorkörpers 22 in axialer Richtung erstrecken. Aus der Zusammenschau von Figur 1 mit der Figur 2 ist ferner ersichtlich, dass der erste Hydraulikraum 51 zumindest abschnittsweise von einem begrenzenden ersten Gehäusebauteil 91 umfasst ist, welches eine Mehrzahl von umfänglich verteilten Öffnungen zur Durchführung der zweiten Wicklungsenden aufweist.

Die ersten Wicklungsenden sind auf einer Kreisbahn mit einem ersten Durchmesser und die zweiten Wicklungsenden auf einer Kreisbahn mit einem zweiten Durchmesser angeordnet, wobei der erste Durchmesser von dem zweiten Durchmesser verschieden ist.

Die ersten Wicklungsenden und die zweiten Wicklungsenden sind zur gleichen axialen Stirnseite der Axialflussmaschine 1 hin orientiert und an der gleichen axialen Stirnseite der Axialflussmaschine 1 verschaltet. Die erste Statorwicklung 41 und die zweite Statorwicklung 42 sind jeweils dreiphasig mit einer Sternpunktverschaltung konfiguriert.

Das hydraulische Verbindungselement 6 ist aus einem elektrisch nicht leitfähigen Material gebildet und weist eine im Wesentlichen zylinderringartige Raumform auf. In der gezeigten Ausführungsform sind die hydraulischen Verbindungselemente 6 radial oberhalb des ersten Statorkörpers 21 und des zweiten Statorkörpers 22 positioniert.

In der Figur 2 ist ferner gezeigt, dass ein hydraulisches Verbindungselement 6 jeweils eine erste Dichtung 81 aufweist, die den ersten Hydraulikraum 51 gegenüber dem Trockenraum 32 des Rotors 2 abdichtet und das hydraulische Verbindungselement 6 eine zweite Dichtung 82 aufweist, die den zweiten Hydraulikraum 52 gegenüber dem Trockenraum 32 des Rotors 2 abdichtet. Die erste Dichtung 81 und die zweite Dichtung 82 sind in dem gezeigten Ausführungsbeispiel als Dichtringe ausgeführt, was insbesondere gut aus der Figur 2 ersichtlich ist.

Die hydraulischen Verbindungselemente 6 sind jeweils mittels einer Presspassung mit einem den ersten Hydraulikraum 51 zumindest abschnittsweise begrenzenden ersten Gehäusebauteil 91 und mit einem den zweiten Hydraulikraum 52 zumindest abschnittsweise begrenzenden zweiten Gehäusebauteil 92 verbunden.

### Bezugszeichenliste

1 elektrische Maschine
2 Stator
3 Rotor
4 Statorwicklung
5 Hydraulikfluid
6 Verbindungselement
7 Leiter
8 Dichtung
9 Gehäusebauteil
10 Antriebsstrang
11 Kraftfahrzeug
21 Statorkörper
22 Statorkörper
30 Rotorwelle
31 Rotorkörper
32 Trockenraum
41 Statorwicklung
42 Statorwicklung
51 Hydraulikraum
52 Hydraulikraum
81 Dichtung
82 Dichtung
91 Gehäusebauteil
92 Gehäusebauteil

## Patentansprüche

1. Elektrische Maschine (1), insbesondere für einen elektrisch betriebenen Antriebsstrang eines Kraftfahrzeugs, umfassend einen relativ zu einem Stator (2) drehbar gelagerten Rotor (3), wobei der Rotor (3) eine Rotorwelle (30) mit zumindest einem ersten auf der Rotorwelle (30) dreh- und verschiebefest angeordneten Rotorkörper (31) aufweist, wobei der Stator (2) einen ersten Statorkörper (21) und einen zweiten Statorkörper (22) umfasst, welche voneinander beabstandet sind, und der erste Statorkörper (21) eine erste Statorwicklung (41) und der zweite Statorkörper (22) eine zweite Statorwicklung (42) aufweist, wobei die erste Statorwicklung (41) innerhalb eines ersten Hydraulikraums (51) und die zweite Statorwicklung (42) innerhalb eines zweiten Hydraulikraums (52) angeordnet ist, innerhalb derer die jeweiligen Statorwicklungen (41,42) jeweils von einem Hydraulikfluid (5) zumindest abschnittsweise kontaktierbar sind,
**dadurch gekennzeichnet, dass**
die elektrische Maschine (1) ein hydraulisches Verbindungselement (6) umfasst, welches den ersten Hydraulikraum (51) hydraulisch mit dem zweiten Hydraulikraum (52) verbindet, wobei innerhalb des hydraulischen Verbindungselements (6) wenigstens ein elektrischer Leiter (7) der ersten Statorwicklung (41) und/oder der zweiten Statorwicklung (42) angeordnet ist.

2. Elektrische Maschine (1) nach Anspruch 1,
**dadurch gekennzeichnet, dass**
die elektrische Maschine als Axialflussmaschine (1) ausgebildet ist, umfassend den relativ zu dem Stator (2) drehbar in einem Trockenraum (32) gelagerten Rotor (3), wobei der Rotor (3) die Rotorwelle (30) mit zumindest dem ersten scheibenförmig ausgebildeten, auf der Rotorwelle (30) dreh- und verschiebefest angeordneten, Rotorkörper (31) aufweist, wobei der Stator (2) den ersten ringscheibenförmigen Statorkörper (21) und den zweiten ringscheibenförmigen Statorkörper (22) umfasst, welche koaxial zueinander und zu der Rotorwelle (30) angeordnet und axial unter Zwischenanordnung des Rotors (3) voneinander beabstandet sind.

3. Elektrische Maschine (1) nach einem der vorherigen Ansprüche,
**dadurch gekennzeichnet, dass**
das hydraulische Verbindungselement (6) aus einem elektrisch nicht leitfähigen Material gebildet ist.

4. Elektrische Maschine (1) nach einem der vorherigen Ansprüche,
**dadurch gekennzeichnet, dass**
das hydraulische Verbindungselement (6) eine im Wesentlichen zylinderringartige Raumform aufweist.

5. Elektrische Maschine (1) nach einem der vorherigen Ansprüche,
**dadurch gekennzeichnet, dass**
das hydraulische Verbindungselement (6) radial oberhalb des ersten Statorkörpers (21) und/oder des zweiten Statorkörpers (22) positioniert ist.

6. Elektrische Maschine (1) nach einem der vorherigen Ansprüche,
**dadurch gekennzeichnet, dass**
das hydraulische Verbindungselement (6) eine erste Dichtung (81) aufweist, die den ersten Hydraulikraum (51) gegenüber dem Trockenraum (32) des Rotors (3) abdichtet und/oder das hydraulische Verbindungselement (6) eine zweite Dichtung (82) aufweist, die den zweiten Hydraulikraum (52) gegenüber dem Trockenraum (32) des Rotors (3) abdichtet.

7. Elektrische Maschine (1) nach Anspruch 6,
**dadurch gekennzeichnet, dass**
die erste Dichtung (81) und/oder die zweite Dichtung (82) einstückig mit dem hydraulischen Verbindungselement (6) ausgebildet ist.

8. Elektrische Maschine (1) nach einem der vorherigen Ansprüche,
**dadurch gekennzeichnet, dass**
das hydraulische Verbindungselement (6) mittels einer Presspassung mit einem den ersten Hydraulikraum (51) zumindest abschnittsweise begrenzenden ersten Gehäusebauteil (91) verbunden ist und/oder das hydraulische Verbindungselement (6) mittels einer Presspassung mit einem den zweiten Hydraulikraum (52) zumindest abschnittsweise begrenzenden zweiten Gehäusebauteil (92) verbunden ist.

9. Elektrische Maschine (1) nach einem der vorherigen Ansprüche,
**dadurch gekennzeichnet, dass**
eine Mehrzahl von hydraulischen Verbindungselementen (6) umfänglich verteilt zwischen dem ersten Hydraulikraum (51) und dem zweiten Hydraulikraum (52) angeordnet ist.

10. Elektrische Maschine (1) nach einem der vorherigen Ansprüche,
**dadurch gekennzeichnet, dass**
die hydraulischen Verbindungselemente (6) im Wesentlichen identisch ausgeführt sind.

## Claims

1. An electric machine (1), in particular for an electrically operated drive train of a motor vehicle, comprising a rotor (3) which is rotatably mounted relative to a stator (2), wherein the rotor (3) has a rotor shaft (30) with at least one first rotor body (31) arranged on the rotor shaft (30) in a non-rotatable and non-displaceable manner, wherein the stator (2) comprises a first stator body (21) and a second stator body (22) which are spaced apart from one another, and the first stator body (21) has a first stator winding (41) and the second stator body (22) has a second stator winding (42), wherein the first stator winding (41) is arranged within a first hydraulic chamber (51) and the second stator winding (42) is arranged within a second hydraulic chamber (52), within which the respective stator windings (41, 42) can each be contacted by a hydraulic fluid (5) at least in sections, **characterized in that**
the electric machine (1) comprises a hydraulic connecting element (6), which hydraulically connects the first hydraulic chamber (51) to the second hydraulic chamber (52), wherein at least one electrical conductor (7) of the first stator winding (41) and/or the second stator winding (42) is arranged within the hydraulic connecting element (6).

2. The electric machine (1) according to claim 1,
**characterized in that**
the electric machine is designed as an axial flux machine (1), comprising the rotor (3) which is rotatably mounted in a dry chamber (32) relative to the stator (2), wherein the rotor (3) has the rotor shaft (30) with at least one first disk-shaped rotor body (31) arranged on the rotor shaft (30) in a non-rotatable and non-displaceable manner, wherein the stator (2) comprises the first annular disk-shaped stator body (21) and the second annular disk-shaped stator body (22), which are arranged coaxially to one another and to the rotor shaft (30) and are axially spaced from one another with the rotor (3) arranged therebetween.

3. The electric machine (1) according to any one of the preceding claims,
**characterized in that**
the hydraulic connecting element (6) is made of an electrically non-conductive material.

4. The electric machine (1) according to any one of the preceding claims,
**characterized in that**
the hydraulic connecting element (6) has a substantially cylindrical ring-like spatial shape.

5. The electric machine (1) according to any one of the preceding claims,
**characterized in that**
the hydraulic connecting element (6) is positioned radially above the first stator body (21) and/or the second stator body (22).

6. The electric machine (1) according to any one of the preceding claims,
**characterized in that**
the hydraulic connecting element (6) has a first seal (81) which seals the first hydraulic chamber (51) from the dry chamber (32) of the rotor (3) and/or the hydraulic connecting element (6) has a second seal (82), which seals the second hydraulic chamber (52) from the dry chamber (32) of the rotor (3).

7. The electric machine (1) according to claim 6,
**characterized in that**
the first seal (81) and/or the second seal (82) is formed integrally with the hydraulic connecting element (6).

8. The electric machine (1) according to any one of the preceding claims,
**characterized in that**
the hydraulic connecting element (6) is connected by means of a press fit to a first housing component (91) which delimits the first hydraulic chamber (51) at least in sections and/or the hydraulic connecting element (6) is connected by means of a press fit to a second housing component (92) which delimits the second hydraulic chamber (52) at least in sections.

9. The electric machine (1) according to any one of the preceding claims,
**characterized in that**
a plurality of hydraulic connecting elements (6) are arranged circumferentially distributed between the first hydraulic chamber (51) and the second hydraulic chamber (52).

10. The electric machine (1) according to any one of the preceding claims,
**characterized in that**
the hydraulic connecting elements (6) are designed substantially identical.

## Revendications

1. Machine électrique (1), en particulier pour une chaîne cinématique actionnée électriquement d'un véhicule automobile, comprenant un rotor (3) qui est monté rotatif par rapport à un stator (2), le rotor (3) présentant un arbre de rotor (30) comportant au moins un premier corps de rotor (31) agencé sur l'arbre de rotor (30) de manière fixe en rotation et en déplacement, le stator (2) comprenant un premier corps de stator (21) et un second corps de stator (22) qui sont espacés l'un de l'autre, et le premier corps de stator (21) présentant un premier enroulement de stator (41) et le second corps de stator (22) présentant un second enroulement de stator (42), le premier enroulement de stator (41) étant agencé à l'intérieur d'une première chambre hydraulique (51) et le second enroulement de stator (42) étant agencé à l'intérieur d'une seconde chambre hydraulique (52), à l'intérieur desquelles les enroulements de stator (41, 42) respectifs peuvent chacun être mis en contact, au moins par sections, avec un fluide hydraulique (5), **caractérisée en ce que**
la machine électrique (1) comprend un élément de liaison hydraulique (6) qui relie hydrauliquement la première chambre hydraulique (51) à la seconde chambre hydraulique (52), au moins un conducteur électrique (7) du premier enroulement de stator (41) et/ou du second enroulement de stator (42) étant agencé à l'intérieur de l'élément de liaison hydraulique (6).

2. Machine électrique (1) selon la revendication 1,
**caractérisée en ce que**
la machine électrique est conçue comme une machine à flux axial (1), comprenant le rotor (3) monté rotatif, dans une chambre sèche (32), par rapport au stator (2), le rotor (3) présentant l'arbre de rotor (30) comportant au moins le premier corps de rotor (31) conçu en forme de disque qui est agencé sur l'arbre de rotor (30) de manière fixe en rotation et en déplacement, le stator (2) comprenant le premier corps de stator (21) en forme de disque et le second corps de stator (22) en forme de disque, qui sont agencés coaxialement l'un par rapport à l'autre et par rapport à l'arbre de rotor (30) et qui sont espacés axialement l'un de l'autre, le rotor (3) étant agencé entre eux.

3. Machine électrique (1) selon l'une quelconque des revendications précédentes, **caractérisée en ce que**
l'élément de liaison hydraulique (6) est réalisé en un matériau électriquement non conducteur.

4. Machine électrique (1) selon l'une quelconque des revendications précédentes, **caractérisée en ce que**
l'élément de liaison hydraulique (6) présente une forme spatiale sensiblement en anneau cylindrique.

5. Machine électrique (1) selon l'une quelconque des revendications précédentes, **caractérisée en ce que**
l'élément de liaison hydraulique (6) est positionné radialement au-dessus du premier corps de stator (21) et/ou du second corps de stator (22).

6. Machine électrique (1) selon l'une quelconque des revendications précédentes, **caractérisée en ce que**
l'élément de liaison hydraulique (6) présente un premier joint (81) qui scelle la première chambre hydraulique (51) par rapport à la chambre sèche (32) du rotor (3) et/ou l'élément de liaison hydraulique (6) présente un second joint (82) qui scelle la seconde chambre hydraulique (52) par rapport à la chambre sèche (32) du rotor (3).

7. Machine électrique (1) selon la revendication 6,
**caractérisée en ce que**
le premier joint (81) et/ou le second joint (82) sont conçus d'un seul tenant avec l'élément de liaison hydraulique (6).

8. Machine électrique (1) selon l'une quelconque des revendications précédentes, **caractérisée en ce que**
l'élément de liaison hydraulique (6) est relié par ajustement serré à un premier élément de boîtier (91) délimitant au moins par sections la première chambre hydraulique (51) et/ou l'élément de liaison hydraulique (6) est relié par ajustement serré à un second élément de boîtier (92) délimitant au moins par sections la seconde chambre hydraulique (52).

9. Machine électrique (1) selon l'une quelconque des revendications précédentes, **caractérisée en ce que**
une pluralité d'éléments de liaison hydraulique (6) sont agencés de façon à être répartis circonférentiellement entre la première chambre hydraulique (51) et la seconde chambre hydraulique (52).

10. Machine électrique (1) selon l'une quelconque des revendications précédentes, **caractérisée en ce que**
les éléments de liaison hydraulique (6) sont réalisés de façon sensiblement identique.
